# EUROPEAN PATENT APPLICATION

(11) **EP 4 806 953 A1**
(43) Date of publication of application: **16.09.2026**
(21) Application number: 24908189.4
(22) Date of filing: 20.12.2024
(51) Int. Cl.: C08L 101/00, C08K 3/013, C08K 7/18, C08K 3/22, C08L 75/04

(54) **CURABLE COMPOSITION**

(30) Priority: 22.12.2023 KR 20230190435
(71) Applicant: LG Chem, Ltd., Seoul 07336 (KR)
(72) Inventor: KIM, Hye Jin, Daejeon 34122 (KR); HONG, Sung Bum, Daejeon 34122 (KR); PARK, Sang Hun, Daejeon 34122 (KR); JUNG, Je Sik, Daejeon 34122 (KR); SEO, Sang Hyuk, Daejeon 34122 (KR); KIM, Be Thy, Daejeon 34122 (KR); LEE, Sol Yi, Daejeon 34122 (KR)
(74) Representative: Hoffmann Eitle
(86) International application number: PCT/KR2024/020874
(87) International publication number: WO 2025/135907

(57) **Abstract**

The present specification discloses a curable composition and a use thereof. The curable composition can form a cured product exhibiting excellent thermal conductivity and volume resistance while achieving a weight saving effect by comprising a low-density filler, and can ensure processability by exhibiting an appropriate level of viscosity. The present specification also discloses a use of the curable composition.

## Description

### Technical Field

This application claims the benefit of priority based on Korean Patent Application No. 10-2023-0190435 dated December 22, 2023, the entire disclosure of which is incorporated herein by reference.

The present specification discloses a curable composition and its applications.

### Background Art

Materials in which fillers with excellent thermal conductivity are formulated in resin components are known. For example, Patent Document 1 discloses a content in which a material obtained by formulating a thermally conductive filler with a polymer is applied to a battery module.

Thermal conductivity characteristics of the material are generally proportional to the filler content. The higher the filler content, the thermal conductivity characteristics of the material improves, but the filler content increase generally causes viscosity increase, thereby adversely affecting the processability of the material.

As disclosed even in Patent Document 1, the application of the material can be performed through an injection process using equipment having a relatively narrow opening, such as a nozzle. When a large amount of filler is present in the material, excessive pressures are applied to the equipment during the injection process, thereby causing damage to the equipment.

When the space into which the material is injected is narrow, the internal pressure generated while the material being injected into the narrow space is applied to the equipment in addition to the pressure applied to the equipment by the material itself, and accordingly, the load on the equipment further increases.

Patent Document 1 attempts to solve the problem by adjusting the particle diameter of the filler component contained in the material. However, Patent Document 1 assumes the use of a high-density filler, such as alumina.

While alumina is advantageous for achieving high thermal conductivity, its high density hinders weight saving.

For weight saving, the use of low-density fillers can be considered. However, low-density fillers generally exhibit inferior thermal conductivity characteristics compared to high-density fillers. Therefore, to achieve high thermal conductivity using low-density fillers, the content increase of the filler can also be considered, but even if the content of the filler with inherently poor thermal conductivity characteristics is increased, there is a limit to increasing thermal conductivity, and even if the thermal conductivity is increased, the load applied to the equipment cannot be reduced in a state where the content of the filler has been increased.

Low-density fillers generally have a characteristic that a conglobation degree is lowered, so that when a large amount of such a filler is applied, there is a problem that it is not easy to secure formulation properties.

Depending on the intended use of the material, insulation above a certain level must be secured.

Therefore, it is a difficult problem to obtain a material ensuring injection processability, capable of achieving excellent physical properties such as thermal conductivity and volume resistance, and ensuring storage and preservation stability, while being advantageous in weight saving by having low-density characteristics.

### [Prior Art Documents]

### [Patent Documents]

(Patent Document 1) Korean Registered Patent No. 10-2393127

### Disclosure

### Technical Problem

The present specification discloses a curable composition and a use thereof. The present specification aims to disclose a curable composition capable of ensuring excellent thermal conductivity and volume resistance, while achieving a weight saving effect by using low-density fillers, and the like, and exhibiting an appropriate level of viscosity to ensure processability. The present specification also aims to provide a use of the curable composition.

### Technical Solution

Among physical properties mentioned herein, the physical property affected by a measurement temperature is a physical property measured at room temperature, unless otherwise specified. The term room temperature means a natural temperature without artificial heating and cooling, which may mean, for example, any temperature within a range of 10°C to 30°C, or a temperature of about 23°C or about 25°C or so.

The unit of temperature mentioned in this specification is Celsius (°C), unless otherwise specified.

Among physical properties mentioned in this specification, the physical property affected by a measurement pressure is a physical property measured at normal pressure, unless otherwise specified. The term normal pressure means a natural pressure without artificial pressurization and depressurization, which may mean, typically any pressure within a range of about 730 mmHg to 790 mmHg or so.

Among physical properties mentioned in this specification, the physical property affected by measurement humidity is a physical property measured at standard-state humidity, unless otherwise specified. The standard-state humidity is any relative humidity (RH%) within a range of 40% to 60% as a relative humidity (RH%), which means, for example, a relative humidity (RH%) of 55% or 60% or so.

In this specification, unless otherwise specified, an average particle diameter of a filler refers to a so-called D50 particle diameter (median particle diameter). The D50 particle diameter is a particle diameter at a 50% point of a cumulative volume in a volume-based cumulative curve of a particle size distribution. The particle size distribution of the filler is obtained based on volume, wherein a particle diameter at a point where a cumulative value reaches 50% from a cumulative curve that the total volume is set to 100%, may be designated as the average particle diameter. The D50 particle diameter may be measured using a laser diffraction method. The method of measuring the average particle diameter is described in "2. Measurement of average particle diameter" of Example sections of this specification.

In this specification, the terms spherical filler and non-spherical filler are concepts distinguished by a circularity degree, and categories of the non-spherical filler may include rectangular, amorphous, disc-shaped, or needle-shaped fillers, and the like.

In this specification, fillers with a circularity degree of about 0.9 or more may be designated as spherical fillers, while fillers with a circularity degree of less than 0.9 may be designated as non-spherical fillers. A sphericity degree may be determined through a particle shape analysis of a filler. A sphericity degree of a filler as a three-dimensional particle is defined as a ratio (S'/S) of a surface area (S) of a filler and a surface area (S') of a sphere with the same volume as the filler. For actual fillers, a circularity degree is generally used. The circularity degree is expressed as a ratio of a boundary (P) of a two-dimensional image obtained from the actual filler and a boundary of a circle with the same area (A) as that of the same image, which is obtained using the following equation:

### <Circularity degree equation>

$Circularity degree = 4 πA / {P}^{2}$

The circularity degree is expressed as a value from 0 to 1, where a perfect circle has a value of 1, and the more irregular the shape, it has a value lower than 1. The sphericity degree value in this specification is an average value of circularity degrees measured using Marvern's particle shape analyzer (FPIA-3000).

A method of evaluating the sphericity degree is described in "3. Sphericity degree evaluation of filler" of Example sections of this specification.

The present specification discloses a curable composition. The term curable composition means a composition capable of being cured. The term curing means a phenomenon in which the viscosity and/or hardness of the composition increases due to a chemical and/or physical reaction or interaction.

The curable composition may be a solvent-based or solvent-free composition. The term solvent-based composition means a composition comprising a solvent (aqueous or organic solvent), and the term solvent-free composition means a composition substantially free of the solvent. In the solvent-free composition, the upper limit of the solvent content may be 5 wt%, 4 wt%, 3 wt%, 2 wt%, 1 wt%, 0.5 wt%, 0.1 wt%, 0.05 wt%, 0.01 wt%, 0.005 wt%, 0.001 wt%, 0.0005 wt%, or 0.0001 wt% or so, and the lower limit thereof may be 0 wt% or so. The content of the solvent in the solvent-free composition may be within a range of less than or equal to, or less than any one of the above-described upper limits; or within a range of more than or equal to, or more than the above-described lower limit while being less than or equal to, or less than any one of the above-described upper limits.

The curable composition may be an energy-ray (e.g., ultraviolet) curing-type composition, a moisture curing-type composition, a thermosetting composition, or a room-temperature curing-type composition. When the curable composition is the energy-ray curing type, the curing of the curable composition may be performed by irradiation of energy rays, such as ultraviolet rays; when the curable composition is the moisture curing type, the curing of the curable composition may be performed by a method of maintaining the composition under appropriate moisture; when it is the thermosetting type, the curing of the curable composition may be performed by a method of applying appropriate heat to the composition; or when it is the room-temperature curing type, the curing of the curable composition may be performed by a method of maintaining the composition at room temperature.

In one example, the curable composition may be a room-temperature curing-type composition, and may be, particularly, a composition in which the curing may be performed by maintaining the composition at room temperature without application of energy rays or the like.

The curable composition may be a two-component composition.

The term two-component composition means a composition in which components required for curing are stored in a physically separated state (e.g., separated into a main agent part and a curing agent part), and the separated components are mixed, and cured by exposure to a curable environment, as is well known.

Therefore, the curable composition may comprise at least a main agent part and a curing agent part. These main agent part and curing agent parts may be physically separated upon storage.

The curable composition can exhibit excellent thermal conductivity, insulation characteristics, and appropriate viscosity even in a state of containing an excessive amount of filler (particularly, a low-density filler having a hydroxy group).

The curable composition may satisfy Equation 1 below:

$0.5 \times \left({V}_{R}+{V}_{C}\right) > {V}_{M}$

In Equation 1, V_{R} is the viscosity of the main agent part, V_{C} is the viscosity of the curing agent part, and V_{M} is the mixed viscosity of the main agent and curing agent parts in a volume ratio of 1:1.

That is, in the curable composition, the mixed viscosity lower than the average viscosity of the main agent and curing agent parts is ensured. By such a characteristic, the curable composition can exhibit excellent processability and injectability. Such a characteristic can be achieved by adjusting the filler compositions of the main agent and curing agent parts, as described below.

The method of measuring the viscosities V_{R}, V_{C}, and V_{M} is described in "6. Viscosity evaluation" of Example sections of this specification.

The ratio {[0.5 × (V_{R}+V_{C})]/V_{M}} of 0.5 × (V_{R}+V_{C}) to V_{M} in Equation 1 may be adjusted. The lower limit of the ratio {[0.5 × (V_{R}+V_{C})]/V_{M}} may be, for example, 1.1, 1.5, 2, 2.5, or 3 or so, and the upper limit thereof may be, for example, 15, 13, 11, 9, 7, 5, 3, 2.5, 2, or 1.5 or so. The ratio may be within a range of more than or equal to, or more than any one of the above-described lower limits; or within a range of more than or equal to, or more than any one of the above-described lower limits while being less than or equal to, or less than any one of the above-described upper limits.

The ratio V_{R}/V_{C} of V_{R} to V_{C} in Equation 1 may also be adjusted. For example, the lower limit of the ratio V_{R}/V_{C} may be 1, 1.2, 1.4, 1.6, 1.8, 1.85, or 1.9 or so, and the upper limit thereof may be 15, 13, 11, 9, 7, 5, 3, 2.5, 2, 1.8, or 1.7 or so. The ratio may be within a range of more than or equal to, or more than any one of the above-described lower limits; or within a range of more than or equal to, or more than any one of the above-described lower limits while being less than or equal to, or less than any one of the above-described upper limits.

The lower limit of V_{M} in Equation 1 may be 70,000 cP, 75,000 cP, 80,000 cP, 85,000 cP, 90,000 cP, 95,000 cP, 100,000 cP, 150,000 cP, 200,000 cP, 210,000 cP, 220,000 cP, or 230,000 cP or so, and the upper limit thereof may be 1,000,000 cP, 900,000 cP, 800,000 cP, 700,000 cP, 600,000 cP, 500,000 cP, 400,000 cP, 300,000 cP, 200,000 cP, or 100,000 cP or so. The V_{M} may be within a range of more than or equal to, or more than any one of the above-described lower limits; or within a range of more than or equal to, or more than any one of the above-described lower limits while being less than or equal to, or less than any one of the above-described upper limits.

The lower limit of V_{R} in Equation 1 may be 100,000 cP, 150,000 cP, 200,000 cP, 250,000 cP, 300,000 cP, or 350,000 cP or so, and the upper limit thereof may be 1,000,000 cP, 900,000 cP, 800,000 cP, 700,000 cP, 600,000 cP, 500,000 cP, 400,000 cP, or 350,000 cP or so. The V_{R} may be within a range of more than or equal to, or more than any one of the above-described lower limits; or within a range of more than or equal to, or more than any one of the above-described lower limits while being less than or equal to, or less than any one of the above-described upper limits.

By adjusting the viscosity characteristics of the curable composition as above, it is possible to secure the desired processability. Such viscosity characteristics can be achieved through adjustment of the composition of the filler to be described below.

The cured product of the curable composition may exhibit high thermal conductivity. For example, the lower limit of the thermal conductivity may be 2.8 W/mK, 2.9 W/mK, 3.0 W/mK, 3.1 W/mK, 3.2 W/mK, 3.3 W/mK, 3.4 W/mK, or 3.5 W/mK or so, and the upper limit thereof may also be 50 W/mK, 45 W/mK, 40 W/mk, 35 W/mk, 30 W/mk, 25 W/mk, 20 W/mk, 15 W/mk, 10 W/mK, 9 W/mK, 8 W/mK, 7 W/mK, 6 W/mK, 5 W/mK or 4 W/mK or so. The thermal conductivity may be within a range of more than or equal to, or more than any one of the above-described lower limits; or within a range of more than or equal to, or more than any one of the above-described lower limits while being less than or equal to, or less than any one of the above-described upper limits. The method of evaluating the thermal conductivity is described in "1. Evaluation of thermal conductivity" of Example sections of this specification.

The cured product of the curable composition may exhibit appropriate insulation characteristics. For example, the curable composition or the cured product of the curable composition may exhibit appropriate volume resistance. For example, the lower limit of the volume resistance may be 1×10¹¹, 5×10¹¹, 1×10¹², 2×10¹², 3×10¹², 4×10¹², 5×10¹², or 5.5×10¹² or so, and the upper limit thereof may be 1×10¹⁵, 5×10¹⁴, 1×10¹⁴, 5×10¹³, 1×10¹³, 8×10¹², 6×10¹², 4×10¹², or 3.5×10¹² or so. The volume resistance may be within a range of less than or equal to, or less than any one of the above-described upper limits; or within a range of more than or equal to, or more than any one of the above-described lower limits while being less than or equal to, or less than any one of the above-described upper limits. The method of measuring the volume resistance is described in "7. Volume resistance evaluation" of Example sections of this specification, and the unit of the volume resistance is Ω·cm.

The curable composition exhibiting excellent properties as above can be realized through application of the composition to be described below.

The curable composition comprises a main agent part and a curing agent part.

The main agent part may comprise at least a main resin and a filler component, and the curing agent part may comprise at least a curing agent and a filler component.

Here, the main resin and the curing agent are curable compounds. The curable compound is a compound enabling curing through chemical or physical interaction or reaction. The types of the main resin and the curing agent, which are curable compounds, are not particularly limited. For example, as the curable compound, a compound capable of forming a resin component used in formation of a so-called thermal interface material (TIM) or adhesive material through curing may be used. The term resin component means an oligomeric or polymeric material, commonly referred to as a resin in the industry.

An example of resin components includes a polyurethane component, a silicone component, an epoxy component, or an acrylic component, and the like.

In one example, the curable compound, i.e., the main resin and the curing agent, may be compounds which react with each other to form the polyurethane component.

As the curable compounds capable of forming the polyurethane, so-called polyol and polyisocyanate are known. These components may form the polyurethane through a urethane reaction. In some cases, a so-called chain extender may also be a curable compound which reacts with the polyol and/or polyisocyanate to form a polyurethane. In one example, the main resin of the main agent part may be the polyol, and the curing agent of the curing agent part may be the polyisocyanate.

In this specification, the term polyol means a compound containing two or more hydroxyl groups. For example, a compound having two hydroxyl groups is generally called a diol, and a compound having three hydroxyl groups is called a triol, where these diols and triols are also a type of polyol.

The lower limit of the number of hydroxyl groups that a polyol has may be 2 or 3, and the upper limit thereof may be 10, 9, 8, 7, 6, 5, 4, 3, or 2. The number of hydroxyl groups may be within a range of less than or equal to, or less than any one of the above-described upper limits; within a range of more than or equal to, or more than any one of the above-described lower limits; or within a range of more than or equal to, or more than any one of the above-described lower limits while being less than or equal to, or less than any one of the above-described upper limits.

The polyol may have a hydroxyl value (OH value) in an appropriate range. The hydroxyl value of the polyol may be measured according to ASTM E 1899-08 standard. The lower limit of the hydroxyl value may be 100 mgKOH/g, 150 mgKOH/g, 200 mgKOH/g, or 250 mgKOH/g or so, and the upper limit thereof may be 500 mgKOH/g, 450 mgKOH/g, 400 mgKOH/g, 350 mgKOH/g, or 300 mgKOH/g or so. The hydroxyl value may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The polyol may have an acid value in an appropriate range. The lower limit of the acid value may be 0 mgKOH/g or so, and the upper limit thereof may be 5 mgKOH/g, 4 mgKOH/g, 3 mgKOH/g, 2 mgKOH/g, 1 mgKOH/g, 0.9 mgKOH/g, 0.8 mgKOH/g, 0.7 mgKOH/g, 0.6 mgKOH/g, 0.5 mgKOH/g, 0.4 mgKOH/g, or 0.3 mgKOH/g or so. The acid value may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The lower limit of the molecular weight or weight-average molecular weight of the polyol may be 100 g/mol, 150 g/mol, 200 g/mol, 250 g/mol, 300 g/mol, 350 g/mol, or 400 g/mol or so, and the upper limit thereof may be 1,000 g/mol, 900 g/mol, 800 g/mol, 700 g/mol, 600 g/mol, or 500 g/mol or so. The molecular weight or weight-average molecular weight may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. The molecular weight may be measured in the manner described in "5. Evaluation of weight-average molecular weight" of Example sections of this specification.

As the polyol, any known polyol may be applied without special limitation. As the polyol forming a polyurethane, a polyether polyol or a polyester polyol, and the like is known, and such a polyol may be used in the curable composition.

As the polyether polyol, (poly)ethylene glycol, diethylene glycol, (poly)propylene glycol, 1,2-butylene glycol, 2,3-butylene glycol, 1,3-propanediol, 1,3-butanediol, 1,4-butanediol, 1,6-hexanediol, neopentyl glycol, 1,2-ethylhexyldiol, 1,5-pentanediol, 1,9-nonanediol, 1,10-decanediol, 1,3-cyclohexanedimethanol and 1,4-cyclohexanedimethanol, (poly)ethylenetriol, diethylenetriol, (poly)propylenetriol, glycerin, 1,2,3-butanetriol, 1,2,4-butanetriol, 1,3,4-hexanetriol, 1,3,6-hexanetriol unit and/or trimethylolpropane, and the like are commonly known.

In one example, as the polyol, a polyester polyol may be used. As the polyester polyol, so-called carboxylic acid-based polyols and caprolactone-based polyols are known, and such a polyol may be used as the resin component alone or in combination of two or more.

The carboxylic acid-based polyol may be obtained by reacting a dicarboxylic acid with a polyol (e.g., a diol or triol), as is well known, and the caprolactone-based polyol may be obtained by reacting caprolactone with a polyol (e.g., a diol or triol), as is also well known.

Here, the type of the applicable dicarboxylic acid is not particularly limited, which may be exemplified by any one, or two or more selected from the group consisting of, for example, phthalic acid, isophthalic acid, terephthalic acid, trimellitic acid, tetrahydrophthalic acid, hexahydrophthalic acid, tetrachlorophthalic acid, oxalic acid, adipic acid, azelaic acid, sebacic acid, succinic acid, malic acid, glutaric acid, malonic acid, pimelic acid, suberic acid, 2,2-dimethylsuccinic acid, 3,3-dimethylglutaric acid, 2,2-dimethylglutaric acid, maleic acid, fumaric acid, itaconic acid, and a fatty acid.

Furthermore, here, the type of the applicable polyol is not particularly limited, which may be exemplified by any one, or two or more selected from the group consisting of ethylene glycol, propylene glycol, 1,2-butylene glycol, 2,3-butylene glycol, 1,3-propanediol, 1,3-butanediol, 1,4-butanediol, 1,6-hexanediol, neopentyl glycol, 1,2-ethylhexyldiol, 1,5-pentanediol, 1,10-decanediol, 1,3-cyclohexanedimethanol, 1,4-cyclohexanedimethanol, glycerin, and trimethylolpropane.

The curing agent part may comprise a polyisocyanate as a curing agent. The term polyisocyanate may mean a compound having one or two or more isocyanate groups. The lower limit of the number of isocyanate groups in the polyisocyanate may be 2, or 3 or so, and the upper limit thereof may be 10, 9, 8, 7, 6, 5, 4, 3, or 2 or so. The number of isocyanate groups may be within a range of more than or equal to, or more than any one of the above-described lower limits; or within a range of less than or equal to, or less than any one of the above-described upper limits while being more than or equal to, or more than any one of the above-described lower limits.

As the polyisocyanate, those commonly used in the industry (e.g., those commonly used to form polyurethanes) without special limitations may be used.

For example, as the polyisocyanate, a diisocyanate (a compound having two isocyanate groups) and/or a polyisocyanate having three or more isocyanate groups may be used.

As the diisocyanate, an aromatic diisocyanate such as tolylene diisocyanate, diphenylmethane diisocyanate, phenylene diisocyanate, polyethylenephenylene polyisocyanate, xylene diisocyanate, tetramethylxylene diisocyanate, trizine diisocyanate, naphthalene diisocyanate and/or triphenylmethane triisocyanate; and/or an aliphatic diisocyanate, including a chain-type diisocyanate such as hexamethylene diisocyanate, trimethylhexamethylene diisocyanate, lysine diisocyanate, norbornane diisocyanate methyl, ethylene diisocyanate, propylene diisocyanate and/or tetramethylene diisocyanate, and an alicyclic diisocyanate such as transcyclohexane-1,4-diisocyanate, isophorone diisocyanate, bis(isocyanatemethyl)cyclohexane diisocyanate and/or dicyclohexylmethane diisocyanate, and the like may be used. As the diisocyanate, one, or a mixture of two or more among the above-described types may be used.

The polyisocyanate having three or more isocyanate groups may be exemplified by one or more selected from the group consisting of a polyisocyanate in a form that one, or two or more of the above-described diisocyanates are added to a polyol, a multimer of the diisocyanate, and a biuret compound. For example, an adduct of the aromatic diisocyanate to the polyol, the multimer, or the biuret compound as an aromatic polyisocyanate; and/or an adduct of the aliphatic diisocyanate to the polyol, the multimer and/or the biuret compound as an aliphatic polyisocyanate, and the like may be used. As the polyisocyanate, one, or a mixture of two or more of the above-described types may be used.

In the curable composition according to one example, as the polyisocyanate, an aliphatic polyisocyanate may be used. The polyisocyanate of the curable composition may not include an aromatic polyisocyanate, and may only include an aliphatic polyisocyanate. By using only an aliphatic polyisocyanate as the polyisocyanate, it may have excellent formulation properties when it has been formulated with a filler component to be described below, and simultaneously, it may be advantageous to secure physical properties with little viscosity changes due to temporal changes.

For example, based on the total weight of the curing agent, the upper limit of the content of the aromatic polyisocyanate in the curing agent may be 10 wt%, 9 wt%, 8 wt%, 7 wt%, 6 wt%, 5 wt%, 4 wt%, 3 wt%, 2 wt%, 1 wt%, 0.5 wt%, 0.1 wt%, 0.05 wt%, 0.01 wt%, 0.005 wt%, 0.001 wt%, 0.0005 wt%, or 0.0001 wt% or so, and the lower limit thereof may be 0 wt% or so. The content of the aromatic polyisocyanate may be within a range of less than or equal to, or less than any one of the above-described upper limits; or within a range of more than or equal to, or more than the above-described lower limit while being less than or equal to, or less than any one of the above-described upper limits.

The lower limit of the molecular weight or weight-average molecular weight of the diisocyanate may be 100 g/mol, 110 g/mol, 120 g/mol, 130 g/mol, 140 g/mol, 150 g/mol, 160 g/mol, or 170 g/mol or so, and the upper limit thereof may be 300 g/mol, 280 g/mol, 260 g/mol, 240 g/mol, 220 g/mol, 200 g/mol, or 180 g/mol or so. The molecular weight or weight-average molecular weight may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The lower limit of the molecular weight or weight-average molecular weight of the polyisocyanate having three or more isocyanate groups may be 600 g/mol, 620 g/mol, 640 g/mol, 660 g/mol, 680 g/mol, 700 g/mol, 720 g/mol, 740 g/mol, 760 g/mol, 780 g/mol, or 800 g/mol or so, and the upper limit thereof may be 1,000 g/mol, 980 g/mol, 960 g/mol, 940 g/mol, 920 g/mol, 900 g/mol, 880 g/mol, 860 g/mol, or 840 g/mol or so. The molecular weight or weight-average molecular weight may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

When the diisocyanate and the polyisocyanate having three or more isocyanate groups are simultaneously applied as polyisocyanates, the lower limit of the weight ratio of the polyisocyanate having three or more isocyanate groups relative to 100 parts by weight of the diisocyanate may be 1 part by weight, 10 parts by weight, 20 parts by weight, 30 parts by weight, 40 parts by weight, 50 parts by weight, 60 parts by weight, 70 parts by weight, 80 parts by weight, 90 parts by weight, or 100 parts by weight or so, and the upper limit thereof may be 1000 parts by weight, 900 parts by weight, 800 parts by weight, 700 parts by weight, 600 parts by weight, 500 parts by weight, 400 parts by weight, 300 parts by weight, 200 parts by weight, 150 parts by weight, or 100 parts by weight or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In one example, the main agent part of the curable composition may comprise the polyol as a curable compound, and the curing agent part may comprise the polyisocyanate as a curable compound.

The content of the curable compound in the curable composition may be determined depending on the filler component. For example, in the main agent part, the lower limit of the ratio of the main resin relative to 100 parts by weight of the filler component may be 1 part by weight, 2 parts by weight, 3 parts by weight, 4 parts by weight, 5 parts by weight, 6 parts by weight, 7 parts by weight, 8 parts by weight, 9 parts by weight, or 10 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight, 15 parts by weight, or 10 parts by weight or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In the curing agent part, the lower limit of the ratio of the curing agent relative to 100 parts by weight of the filler component may be 1 part by weight, 2 parts by weight, 3 parts by weight, 4 parts by weight, 5 parts by weight, 6 parts by weight, 7 parts by weight, 8 parts by weight, 9 parts by weight, or 10 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight, 15 parts by weight, or 10 parts by weight or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The ratio between the main agent part and the curing agent part in the curable composition is not limited, and for example, the ratio may be controlled so that the main resin of the main agent part and the curing agent of the curing agent part may react to form a polyurethane. In one example, the ratio of the main agent part and the curing agent part may be adjusted by considering a ratio (OH/NCO) of the mole number (OH) of hydroxyl groups contained in the polyol, which is the main resin, to the mole number (NCO) of isocyanate groups contained in the polyisocyanate, which is the curing agent. For example, the lower limit of the ratio OH/NCO may be 0.01, 0.05, 0.1, 0.5, or 1 or so, and the upper limit thereof may be 100, 50, 25, 10, 9, 8, 7, 6, 5, 4, 3, 2, or 1 or so. The ratio OH/NCO may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The curable composition comprises a filler component together with the curable compound. The term filler component is a component composed solely of fillers. Therefore, all fillers included in the curable composition may be combined to form the filler component.

The lower limit of the weight ratio of the filler component in the curable composition may be 70 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, or 90 wt% or so, and the upper limit thereof may be 99 wt%, 98 wt%, 97 wt%, 96 wt%, 95 wt%, 94 wt%, 93 wt%, 92 wt%, 91 wt%, 90 wt%, 89 wt%, 88 wt%, or 87 wt% or so. The weight ratio of the filler component may be within a range of more than or equal to, or more than any one of the above-described lower limits; or within a range of less than or equal to, or less than any one of the above-described upper limits while being more than or equal to, or more than any one of the above-described lower limits. The ratio of the filler component may be the ratio of the filler component in the main agent part; the ratio of the filler component in the curing agent part; or the ratio of the filler component in the mixture of the main agent part and the curing agent part.

The filler component may comprise thermally conductive fillers, or may be a thermally conductive filler component. The term thermally conductive filler component or thermally conductive filler means a filler component or filler that enables a cured product of the curable composition to exhibit the above-described thermal conductivity through the relevant filler.

Examples of fillers forming the filler component include oxide fillers such as aluminum oxide (alumina), magnesium oxide, beryllium oxide, or titanium oxide; nitride fillers such as boron nitride, silicon nitride, or aluminum nitride; carbide fillers such as silicon carbide; hydroxide fillers such as aluminum hydroxide or magnesium hydroxide; metal fillers such as copper, silver, iron, aluminum, or nickel; metal alloy fillers such as titanium; or silicon powders such as quartz, glass, or silica, and the like, but are not limited thereto. Furthermore, in consideration of securing insulation characteristics, carbon fillers such as graphite or activated carbon may also be considered.

The composition of the filler component may be adjusted, to secure desired physical properties, such as viscosity characteristics, thermal conductivity, and/or volume resistance.

For example, the filler component may be a mixture of two or more fillers with different average particle diameters. For example, the lower limit of the types of fillers having different average particle diameters in the mixture as the filler component may be 2, 3, or 4 or so, and the upper limit thereof may be 10, 9, 8, 7, 6, 5, 4, or 3 or so. The number of the types of fillers may be within a range of more than or equal to, or more than any one of the above-described lower limits; or within a range of less than or equal to, or less than any one of the above-described upper limits while being more than or equal to, or more than any one of the above-described lower limits.

In the above state, the weighted average particle diameter of the filler component may be adjusted. Here, the term weighted average particle diameter is a result value obtained by considering the average particle diameters of the two or more fillers included in the filler component and the ratios of the fillers. For example, when any filler component is a mixture in which a filler (1) with an average particle diameter of D1, a filler (2) with an average particle diameter of D2, a filler (3) with an average particle diameter of D3, and a filler (4) with an average particle diameter of D4 are formulated in a weight ratio of W1:W2:W3:W4 (1:2:3:4), the weighted average particle diameter of the filler component is calculated as (D1×W1+D2×W2+D3×W3+D4×W4)/(W1+W2+W3+W4).

For example, the weighted average particle diameters of the filler components in the main agent part and the curing agent part may each be adjusted so that ΔD in Equation 2 below falls within a predetermined range.

$ΔD = 100 \times {D}_{C} / {D}_{R}$

In Equation 2, D_{R} is a weighted average particle diameter of the filler component of the main agent part, and D_{C} is a weighted average particle diameter of the filler component of the curing agent part.

The lower limit of ΔD in Equation 2 may be 30, 50, 70, 90, 100, 110, 120, or 130, and the upper limit thereof may be 500, 450, 400, 350, 300, 250, 200, 150, or 120. The ΔD may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity properties, volume resistance, and/or thermal conductivity, etc.).

In Equation 2, the lower limit of D_{R} may be 5 µm, 10 µm, 15 µm, 20 µm, 25 µm, 30 µm, 35 µm, 40 µm, or 43 µm or so, and the upper limit thereof may be 200 µm, 190 µm, 180 µm, 170 µm, 160 µm, 150 µm, 140 µm, 130 µm, 120 µm, 110 µm, 100 µm, 90 µm, 85 µm, 80 µm, 75 µm, 70 µm, 65 µm, 60 µm, 55 µm, 50 µm, 45 µm, 40 µm, or 35 µm or so. The above D_{R} may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity properties, volume resistance, and/or thermal conductivity, etc.).

In the above state, the weighted average BET specific surface area of the filler component may be adjusted. Here, the term weighted average BET specific surface area is a result value obtained by considering the BET specific surface areas of two or more fillers included in the filler component and the ratios of the fillers. For example, when any filler component is a mixture in which a filler (1) with a BET specific surface area of B1, a filler (2) with a BET specific surface area of B2, a filler (3) with a BET specific surface area of B3, and a filler (4) with a BET specific surface area of B4 are formulated in a weight ratio of W1:W2:W3:W4 (1:2:3:4), the weighted average BET specific surface area of the filler component is calculated as (B1×W1+B2×W2+B3×W3+B4×W4)/(W1+W2+W3+W4).

Meanwhile, the BET specific surface area of the filler may be evaluated in the manner described in "4. Evaluation of filler specific surface area" of Example sections of this specification. Furthermore, in this specification, the unit of the BET specific surface area or the weighted average BET specific surface area is m²/g.

For example, the weighted average BET specific surface areas of the filler components in the main agent part and the curing agent part may each be adjusted so that ΔB in Equation 3 below falls within a predetermined range.

$ΔB = 100 \times {B}_{R} / {B}_{C}$

In Equation 3, B_{R} is a weighted average BET specific surface area of the filler component of the main agent part, and B_{C} is a weighted average BET specific surface area of the filler component of the curing agent part.

The lower limit of ΔB in Equation 3 above may be 10, 30, 50, 70, 90, 100, 110, 120, or 130 or so, and the upper limit thereof may be 500, 450, 400, 350, 300, 250, 200, 150, or 100 or so. The ΔB may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity properties, volume resistance, and/or thermal conductivity, etc.).

In Equation 3, the lower limit of B_{R} may be 0.01 m²/g, 0.05 m²/g, 0.1 m²/g, 0.5 m²/g, 1 m²/g, or 1.5 m²/g or so, and the upper limit thereof may be 10 m²/g, 9 m²/g, 8 m²/g, 7 m²/g, 6 m²/g, 5 m²/g, 4 m²/g, 3 m²/g, 2 m²/g, 1.5 m²/g, or 1 m²/g or so. The B_{R} may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity characteristics, volume resistance, and/or thermal conductivity, etc.).

When the filler components of the main agent and curing agent parts are each comprised of spherical fillers and non-spherical fillers, the weighted average particle diameter and/or weighted average BET specific surface area may be further adjusted considering the desired effect.

For example, the weighted average particle diameters of the filler components in the main agent part and the curing agent part may be adjusted so that ΔD_{S} in Equation 4 below falls within a predetermined range.

${ΔD}_{S} = 100 \times {D}_{CS} / {D}_{RS}$

In Equation 4, D_{S} is the weighted average particle diameter of all spherical fillers included in the filler component of the main agent part, and D_{CS} is the weighted average particle diameter of all spherical fillers included in the filler component of the curing agent part.

The lower limit of ΔD_{S} in Equation 4 may be 30, 50, 70, 90, or 100 or so, and the upper limit thereof may be 500, 450, 400, 350, 300, 250, 200, 150, 120, 110, or 100 or so. The ΔD_{S} may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity properties, volume resistance, and/or thermal conductivity, etc.).

In Equation 4, the lower limit of the D_{RS} may be 5 µm, 10 µm, 15 µm, 20 µm, 25 µm, 30 µm, 35 µm, 40 µm, 45 µm, 50 µm, 55 µm, 60 µm, 65 µm, or 70 µm or so, and the upper limit thereof may be 200 µm, 190 µm, 180 µm, 170 µm, 160 µm, 150 µm, 140 µm, 130 µm, 120 µm, 110 µm, 100 µm, 95 µm, or 90 µm or so. The D_{RS} may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity characteristics, volume resistance, and/or thermal conductivity, etc.).

The weighted average particle diameters of the filler components in the main agent part and the curing agent part may be each adjusted so that ΔD_{A} in Equation 5 below falls within a predetermined range.

${ΔD}_{A} = 100 \times {D}_{CA} / {D}_{RA}$

In Equation 5, D_{RA} is the weighted average particle diameter of all non-spherical fillers included in the filler component of the main agent part, and D_{CA} is the weighted average particle diameter of all non-spherical fillers included in the filler component of the curing agent part.

The lower limit of ΔD_{A} in Equation 5 above may be 0.5, 1, 5, 7, 10, 20, 30, 50, 70, 90, 95, or 100 or so, and the upper limit thereof may be 300, 250, 200, 150, 100, 90, 80, 70, 60, 50, 40, 30, 20, or 10 or so. The ΔD_{A} may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity properties, volume resistance, and/or thermal conductivity, etc.).

In Equation 5, the lower limit of D_{RA} may be 0.1 µm, 0.5 µm, 1 µm, 1.5 µm, 2 µm, 5 µm, 10 µm, 15 µm, 20 µm, or 25 µm or so, and the upper limit thereof may be 200 µm, 190 µm, 180 µm, 170 µm, 160 µm, 150 µm, 140 µm, 130 µm, 120 µm, 110 µm, 100 µm, 90 µm, 85 µm, 80 µm, 75 µm, 70 µm, 65 µm, 60 µm, 55 µm, 50 µm, 45 µm, 40 µm, 35 µm, 30 µm, 25 µm, 20 µm, 15 µm, 10 µm, 8 µm, 6 µm, 4 µm, or 3 µm or so. The D_{RA} may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity characteristics, volume resistance, and/or thermal conductivity, etc.).

For example, the weighted average BET specific surface areas of the filler components in the main agent part and the curing agent part may be adjusted so that ΔB_{S} in Equation 6 below falls within a predetermined range.

${ΔB}_{S} = 100 \times {B}_{RS} / {B}_{CS}$

In Equation 6, B_{RS} is the weighted average BET specific surface area of all spherical fillers included in the filler component of the main agent part, and B_{CS} is the weighted average BET specific surface area of all spherical fillers included in the filler component of the curing agent part. 50 500

The lower limit of ΔB_{S} in Equation 6 may be 50, 55, 60, 65, 70, 75, 80, 85, 90, 95, 100, or 105 or so, and the upper limit thereof may be 500, 450, 400, 350, 300, 250, 200, 150, 130, 120, 110, or 100 or so. The above ΔB_{S} may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity properties, volume resistance, and/or thermal conductivity, etc.).

In Equation 6, the lower limit of B_{RS} may be 0.001 m²/g, 0.005 m²/g, 0.01 m²/g, 0.05 m²/g, or 0.1 m²/g or so, and the upper limit thereof may be 10 m²/g, 9 m²/g, 8 m²/g, 7 m²/g, 6 m²/g, 5 m²/g, 4 m²/g, 3 m²/g, 2 m²/g, 1.5 m²/g, 1 m²/g, 0.9 m²/g, 0.8 m²/g, 0.7 m²/g, 0.6 m²/g, 0.5 m²/g, 0.4 m²/g, 0.3 m²/g, or 0.2 m²/g or so. The B_{RS} may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. By adjusting the components of the filler in this manner, it is possible to easily secure the desired properties (viscosity characteristics, volume resistance, and/or thermal conductivity, etc.).

For example, the weighted average BET specific surface areas of the filler components in the main agent part and the curing agent part may each be adjusted so that ΔB_{A} in Equation 7 below falls within a predetermined range.

${ΔB}_{A} = 100 \times {B}_{RA} / {B}_{CA}$

In Equation 7, B_{RA} is the weighted average BET specific surface area of all non-spherical fillers included in the filler component of the main agent part, and B_{CA} is the weighted average BET specific surface area of all non-spherical fillers included in the filler component of the curing agent part. 20400

The lower limit of ΔBA in Equation 7 above may be 20, 30, 50, 70, 90, 95, or 100 or so, and the upper limit thereof may be 500, 450, 400, 350, 300, 250, 200, 150, 100, 90, 80, 70, 60, or 55 or so. The ΔB_{A} may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity properties, volume resistance, and/or thermal conductivity, etc.).

In Equation 7, the lower limit of B_{RA} may be 0.01 m²/g, 0.05 m²/g, 0.1 m²/g, 0.5 m²/g, 1 m²/g, 1.5 m²/g, 2 m²/g, 2.5 m²/g, 3 m²/g, or 3.5 m²/g or so, and the upper limit thereof may be 10 m²/g, 9 m²/g, 8 m²/g, 7 m²/g, 6 m²/g, 5 m²/g, 4 m²/g, 3 m²/g, or 2 m²/g or so. The B_{RA} may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. By adjusting the components of such fillers, it is possible to easily secure the desired properties (viscosity characteristics, volume resistance, and/or thermal conductivity, etc.).

Here, the spherical filler may comprise, for example, at least an oxide filler and/or a nitride filler among various fillers as described above.

For example, the lower limit of the total weight ratio of the oxide filler and the nitride filler based on the total weight of the spherical fillers among the filler components in the main agent part and/or the curing agent part may be 50 wt%, 55 wt%, 60 wt%, 65 wt%, 70 wt%, 75 wt%, 80 wt%, 85 wt%, 90 wt%, or 95 wt% or so, and the upper limit thereof may be 100 wt%, or 95 wt% or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

Here, the non-spherical filler may comprise, for example, at least a hydroxide filler among various fillers as described above.

For example, the lower limit of the weight ratio of the hydroxide filler based on the total weight of the spherical fillers among the filler components in the main agent part and/or the curing agent part may be 50 wt%, 55 wt%, 60 wt%, 65 wt%, 70 wt%, 75 wt%, 80 wt%, 85 wt%, 90 wt%, or 95 wt% or so, and the upper limit thereof may be 100 wt%, or 95 wt% or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The filler component may include at least a low-density filler and a high-density filler. The terms low-density and high-density fillers mean fillers each having a certain level of density. For example, the upper limit of the density of the low-density filler may be 3.00 g/cm³, 2.90 g/cm³, 2.80 g/cm³, 2.70 g/cm³, 2.60 g/cm³, 2.50 g/cm³, or 2.45 g/cm³ or so, and the lower limit thereof may be 1.5 g/cm³, 2 g/cm³, 2.1 g/cm³, 2.2 g/cm³, 2.3 g/cm³, or 2.4 g/cm³ or so. The density of the low-density filler may be within a range of less than or equal to, or less than any one of the above-described upper limits; or within a range of less than or equal to, or less than any one of the above-described upper limits while being more than or equal to, or more than any one of the above-described lower limits.

For example, the lower limit of the density of the high-density filler may be 3.00 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, or 3.95 g/cm³ or so, and the upper limit thereof may be 7 g/cm³, 6.5 g/cm³, 6 g/cm³, 5.5 g/cm³, 5 g/cm³, 4.5 g/cm³, or 4 g/cm³ or so. The density of the high-density filler may be within a range of more than or equal to, or more than any one of the above-described lower limits; or within a range of less than or equal to, or less than any one of the above-described upper limits while being more than or equal to, or more than any one of the above-described lower limits.

The density of the filler may be measured by a known method, and may be obtained, for example, based on ASTM D792 standard.

The spherical filler may comprise, for example, at least the high-density filler among various fillers as described above.

For example, the lower limit of the weight ratio of the high-density filler based on the total weight of the spherical fillers among the filler components in the main agent part and/or the curing agent part may be 50 wt%, 55 wt%, 60 wt%, 65 wt%, 70 wt%, 75 wt%, 80 wt%, 85 wt%, 90 wt%, or 95 wt% or so, and the upper limit thereof may be 100 wt%, or 95 wt% or so. The above weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

Here, the non-spherical filler may comprise, for example, at least the low-density filler among various fillers as described above.

For example, the lower limit of the weight ratio of the low-density filler based on the total weight of the spherical fillers among the filler components in the main agent part and/or the curing agent part may be 50 wt%, 55 wt%, 60 wt%, 65 wt%, 70 wt%, 75 wt%, 80 wt%, 85 wt%, 90 wt%, or 95 wt% or so, and the upper limit thereof may be 100 wt%, or 95 wt% or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

By applying such filler components, it is possible to form a curable composition or a cured product thereof exhibiting the desired properties.

The main agent and curing agent parts of the curable composition may each basically comprise the curable compound and filler component as described above, and may comprise additional components as needed. In this instance, the types of components capable of inclusion are not particularly limited. For example, one, or two or more of common components, such as a plasticizer, a curing catalyst, a flame retardant, a viscosity modifier, a thixotropic agent, a diluent, a surface treatment agent, and/or a coupling agent, may be added to the curable composition as needed.

The curable composition may be prepared by mixing the respective components as listed above. In this process, the mixing method is not particularly limited, and any known mixing method for preparing a composition may be applied.

For example, the main agent part may further comprise a catalyst. In this case, the specific type of catalyst is not particularly limited, and, for example, a common urethane reaction catalyst may be applied.

The present specification also discloses a use of the curable composition or a cured product thereof. For example, the present specification discloses a product comprising a heat-generating component and a material in contact with the heat-generating component, wherein the material comprises the above-described curable composition or a cured product thereof.

The type of the heat-generating component is not particularly limited, and all components having characteristics generating heat during a use or storage process, wherein heat by such heat generation must be managed, may be applied. In such products, the material comprising the curable composition or a cured product thereof may be used as a so-called TIM (Thermal Interface Material).

For example, various electrical and electronic products, such as irons, washing machines, dryers, clothes care devices, electric shavers, microwave ovens, electric rice cookers, refrigerators, dishwashers, air conditioners, fans, humidifiers, air purifiers, mobile phones, walkie-talkies, televisions, radios, computers, or laptops, or battery products such as secondary batteries, may comprise such heat-generating components.

For example, in the products, the material comprising the curable composition or a cured product thereof may be used as a use for transferring heat generated from the heat-generating component to a cooling area. In this case, the material may dissipate heat generated from the heat-generating component. The heat-generating component may be a battery cell or a battery module.

### Advantageous Effects

The present specification discloses a curable composition and a use thereof. The curable composition can form a cured product exhibiting excellent thermal conductivity and volume resistance while achieving a weight saving effect by comprising a low-density filler, and can ensure processability by exhibiting an appropriate level of viscosity. The present specification also discloses a use of the curable composition.

### Mode for Invention

Hereinafter, the curable composition, and the like are specifically described through examples and comparative examples, but the scope of the curable composition, and the like is not limited due to the contents presented below.

### 1. Evaluation of thermal conductivity

Thermal conductivity was measured by a hot-disk method according to ISO 22007-2 standard. Specifically, mixtures in which main agent and the curing agent parts of curable compositions prepared in Examples or Comparative Examples were mixed in a volume ratio of 1:1 were each placed in a mold having a thickness of about 7 mm or so, and then cured, and the thermal conductivity was measured in the through plane direction using the Hot Disk equipment. As stipulated in the standard ISO 22007-2, the Hot Disk equipment is an equipment that can check the thermal conductivity by measuring the temperature change (electrical resistance change) while the sensor with the nickel wire double spiral structure is heated, and the thermal conductivity was measured according to this standard. Here, the curing of the curable composition was performed by maintaining the mixture of the main agent part and the curing agent part in a volume ratio of 1:1 at room temperature (about 25°C) for 24 hours or so.

### 2. Measurement of average particle diameter

The average particle diameter of the filler mentioned in this specification is the D50 particle diameter of the filler, which is the particle diameter measured by Marvern's Mastersizer 3000 equipment in accordance with ISO-13320 standard. Upon measurement, ethanol was used as a solvent. The incident laser is scattered by the fillers dispersed in the solvent, and the values of the intensity and directionality of the scattered laser vary depending on the size of the filler, which are analyzed using the Mie theory, whereby the D50 particle diameter can be obtained. Through the above analysis, the distribution can be obtained through conversion to the diameter of a sphere having the same volume as the dispersed fillers, and the particle diameter can be evaluated by obtaining the D50 value, which is the median value of the distribution.

### 3. Evaluation of filler sphericity degree

It was evaluated whether a filler was a spherical filler by measuring a sphericity degree of the filler. A sphericity degree of a filler as a three-dimensional particle is defined as a ratio (S'/S) of the particle's surface area (S) and a surface area (S') of a sphere with the same volume as that of the particle, and for actual particles, it is typically an average value of circularity degrees. The circularity degree is a ratio of a boundary (P) obtained from a two-dimensional image of a particle and a boundary of a circle with the same area (A) as the same image, which is theoretically obtained using the following equation. The circularity degree is a value ranging from 0 to 1, where in the case of an ideal circle, the circularity degree is 1. In this specification, a filler with a circularity degree of 0.9 or more is defined as a spherical filler, and a filler having the circularity degree of less than 0.9 or being amorphous is defined as a non-spherical filler.

### <Circularity degree equation >

$Circularity degree = 4 πA / {P}^{2}$

The sphericity degree in this specification is the average value of circularity degrees measured using Marvern's particle shape analysis equipment (FPIA-3000).

### 4. Evaluation of filler specific surface area

A BET (Brunauer-Emett-Teller) specific surface area is a specific surface area calculated by a BET (Brunauer-Emett-Teller) method, by using an adsorption curve obtained by adsorbing nitrogen gas onto a sample. The BET specific surface area was obtained by adsorbing nitrogen gas using an ASAP (Accelerated Surface Area and Porosimetry System)^{™} 2020.

### 5. Evaluation of weight-average molecular weight

A weight-average molecular weight (Mw) was measured using GPC (Gel permeation chromatography). The unit of weight-average molecular weight is g/mol. A sample was placed in a 20 mL vial, and diluted with THF (tetrahydrofuran) to a concentration of about 20 mg/mL, and then after the calibration standard sample and the sample to be analyzed were filtered through a syringe filter (pore size: 0.2 µm), the weight-average molecular weight was measured. Agilent Technologies' ChemStation was used as an analysis program, and the weight-average molecular weight (Mw) was obtained by comparing an elution time with a calibration curve.

### <GPC measurement conditions>

Instrument: Agilent Technologies' 1200 series
Column: using Agilent Technologies' TL Mix. A & B
Solvent: THF
Column temperature: 40°C
Sample concentration: 20 mg/mL, 10 µL injection

As standard samples, using MP: 364000, 91450, 17970, 4910, and 1300.

### 6. Viscosity evaluation

Viscosity can be measured using a viscometer (Brookfield, Brookfield DVNext) and a CP-52Z spindle. The spindle is selected depending on a viscosity measurement range. After performing zero adjustment of the viscometer, the spindle is mounted on a spindle connection and a plate is mounted on a plate connection, and then they are adjusted to create a constant separation gap between the spindle and the plate through an adjustment lever. The plate is detached, about 0.5 mL or so of a viscosity measurement target is applied to the center of the detached plate, and then the plate applied with the curable composition is mounted on the plate connection again, and the viscosity is measured within 3 minutes at about 25°C and a rotation speed condition of 2.4 rpm.

### 7. Volume resistance evaluation

Volume resistance was evaluated according to measurement criteria of ASTM D257. Specifically, a composition obtained by mixing each curing agent part prepared in Examples and Comparative Examples with a main agent part of Preparation Example 1 in a volume ratio of 1:1 was cured to obtain a disk-shaped cured product with a diameter of about 10 cm or so and a thickness of about 0.2 cm or so. The curing was performed in the same manner as in the thermal conductivity measurement. Subsequently, the volume resistance was measured by using a volume resistance measuring device (HIRESTA-US_MCP-HT8000, Mitsubishi Chemical), and inputting an applied voltage of 500 V, a measurement time of 1 minute, and the thickness of the disk-shaped cured product into the device.

### Example 1.

### Preparation of main agent part

A main agent part was prepared by mixing a polyol (P), a filler component (F), and a urethane reaction catalyst (C) in a weight ratio of 9.1:0.1:90.8 (P: F: C). As the polyol, a polyester-based polyol (Capa^{TM} 2043) (Mw: about 400 g/mol), and as the catalyst, dibutyltin dilaurate was used.

The filler component was prepared by mixing a spherical filler A1 (alumina) with a D50 particle diameter of about 70 µm or so and a BET specific surface area of about 0.10 m²/g or so, a non-spherical filler H1 (aluminum hydroxide) with a D50 particle diameter of about 50 µm or so and a specific surface area of about 0.33 m²/g or so, and a non-spherical filler H2 (aluminum hydroxide) with a D50 particle diameter of about 2 µm or so and a specific surface area of about 3.5 m²/g or so. The mixing ratio was 4:2:4 (A1: H1: H2) as a weight ratio.

The weighted average particle diameter of the entire filler component was about 38.8 µm or so, the weighted average particle diameter of the spherical filler was about 70 µm or so, and the weighted average particle diameter of the non-spherical filler was about 18 µm or so. Furthermore, the weighted BET specific surface area of the entire filler component was about 1.51 m²/g or so, the weighted average BET specific surface area of the spherical filler was about 0.10 m²/g or so, and the weighted average BET specific surface area of the non-spherical filler was about 2.44 m²/g or so.

The viscosity of the main agent part thus prepared was about 333,400 cP or so.

### Preparation of curing agent part

A curable composition was prepared by mixing a polyisocyanate (N) and a filler component (F) in a weight ratio of 9.2:90.8 (N: F). As the polyisocyanate, HDI (Hexamethylene diisocyanate) was used.

The filler component was prepared by mixing a filler A1 (alumina) of Example 1, a spherical filler A2 (alumina) with a D50 particle diameter of about 20 µm or so and a specific surface area of about 0.14 m²/g or so, and a filler H2 (aluminum hydroxide) of Example 1. The filler component was mixed in a weight ratio of 6:1:3 (A1: A2: H2).

The weighted average particle diameter of the entire filler component was about 44.6 µm or so, the weighted average particle diameter of the spherical filler was about 62.86 µm or so, and the weighted average particle diameter of the non-spherical filler was about 2 µm or so. Furthermore, the weighted BET specific surface area of the entire filler component was about 1.12 m²/g or so, the weighted average BET specific surface area of the spherical filler was about 0.11 m²/g or so, and the weighted average BET specific surface area of the non-spherical filler was about 3.50 m²/g or so.

The viscosity of the curing agent part thus prepared was about 195,100 cP or so.

### Preparation of curable composition

The main agent part and the curing agent part were formulated in a volume ratio of 1:1 to prepare a curable composition. The viscosity (mixed viscosity) measured immediately after preparation of the curable composition (immediately after mixing) was about 104,800 cP.

### Example 2.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H2, and A2 of Example 1. The mixing ratio was 6:1:3 (A1: A2: H2) as a weight ratio.

The weighted average particle diameter of the entire filler component was about 44.6 µm or so, the weighted average particle diameter of the spherical filler was about 62.86 µm or so, and the weighted average particle diameter of the non-spherical filler was about 2 µm or so. Furthermore, the weighted BET specific surface area of the entire filler component was about 1.12 m²/g or so, the weighted average BET specific surface area of the spherical filler was about 0.11 m²/g or so, and the weighted average BET specific surface area of the non-spherical filler was about 3.50 m²/g or so.

The viscosity of the main agent part thus prepared was about 321,600 cP or so.

Furthermore, the main agent part was mixed with the curing agent part of Example 1 in a volume ratio of 1:1 to prepare a curable composition, and the viscosity (mixed viscosity) measured immediately after preparation (immediately after mixing) of the curable composition was about 86,070 cP.

### Example 3.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H1, H2, and A2 of Example 1. The mixing ratio was 4:2:1:3 (A1: H1: A2: H2) as a weight ratio.

The weighted average particle diameter of the entire filler component was about 40.6 µm or so, the weighted average particle diameter of the spherical filler was about 60 µm or so, and the weighted average particle diameter of the non-spherical filler was about 21.2 µm or so. Furthermore, the weighted BET specific surface area of the entire filler component was about 1.17 m²/g or so, the weighted average BET specific surface area of the spherical filler was about 0.11 m²/g or so, and the weighted average BET specific surface area of the non-spherical filler was about 2.23 m²/g or so.

The viscosity of the main agent part thus prepared was about 343,300 cP or so.

Furthermore, the main agent part was mixed with the curing agent part of Example 1 in a volume ratio of 1:1 to prepare a curable composition, and the viscosity (mixed viscosity) measured immediately after preparation (immediately after mixing) of the curable composition was about 192,100 cP.

### Example 4.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H1, H2, and A2 of Example 1. The mixing ratio was 40:20:15:20 (A1: H1: A2: H2) as a weight ratio.

The weighted average particle diameter of the entire filler component was about 43.58 µm or so, the weighted average particle diameter of the spherical filler was about 56.36 µm or so, and the weighted average particle diameter of the non-spherical filler was about 26.0 µm or so. Furthermore, the weighted BET specific surface area of the entire filler component was about 0.87 m²/g or so, the weighted average BET specific surface area of the spherical filler was about 0.11 m²/g or so, and the weighted average BET specific surface area of the non-spherical filler was about 1.92 m²/g or so.

The viscosity of the main agent part thus prepared was about 375,700 cP or so.

Furthermore, the main agent part was mixed with the curing agent part of Example 1 in a volume ratio of 1:1 to prepare a curable composition, and the viscosity (mixed viscosity) measured immediately after preparation of the curable composition (immediately after mixing) was about 177,800 cP.

### Example 5.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H1, H2, and A2 of Example 1. The mixing ratio was 4:2:2:2 (A1: H1: A2: H2) as a weight ratio.

The weighted average particle diameter of the entire filler component was about 42.40 µm or so, the weighted average particle diameter of the spherical filler was about 53.33 µm or so, and the weighted average particle diameter of the non-spherical filler was about 26.0 µm or so. Furthermore, the weighted BET specific surface area of the entire filler component was about 0.83 m²/g or so, the weighted average BET specific surface area of the spherical filler was about 0.11 m²/g or so, and the weighted average BET specific surface area of the non-spherical filler was about 1.92 m²/g or so.

The viscosity of the main agent part thus prepared was about 374,400 cP or so.

Furthermore, the main agent part was mixed with the curing agent part of Example 1 in a volume ratio of 1:1 to prepare a curable composition, and the viscosity (mixed viscosity) measured immediately after preparation (immediately after mixing) of the curable composition was about 239,700 cP.

### Example 6.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H1, H2, and A2 of Example 1. The mixing ratio was 3:2:1:4 (A1: H1: A2: H2) as a weight ratio.

The weighted average particle diameter of the entire filler component was about 33.80 µm or so, the weighted average particle diameter of the spherical filler was about 57.50 µm or so, and the weighted average particle diameter of the non-spherical filler was about 18.0 µm or so. Furthermore, the weighted BET specific surface area of the entire filler component was about 1.51 m²/g or so, the weighted average BET specific surface area of the spherical filler was about 0.11 m²/g or so, and the weighted average BET specific surface area of the non-spherical filler was about 2.44 m²/g or so.

The viscosity of the main agent part thus prepared was about 375,700 cP or so.

Furthermore, the main agent part was mixed with the curing agent part of Example 1 in a volume ratio of 1:1 to prepare a curable composition, and the viscosity (mixed viscosity) measured immediately after preparation (immediately after mixing) of the curable composition was about 111,100 cP.

### Example 7.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H1, H2, and A2 from Example 1. The mixing ratio was 35:20:15:30 (A1: H1: A2: H2) as a weight ratio.

The weighted average particle diameter of the entire filler component was about 38.10 µm or so, the weighted average particle diameter of the spherical filler was about 55 µm or so, and the weighted average particle diameter of the non-spherical filler was about 21.20 µm or so. Furthermore, the weighted BET specific surface area of the entire filler component was about 1.17 m²/g or so, the weighted average BET specific surface area of the spherical filler was about 0.11 m²/g or so, and the weighted average BET specific surface area of the non-spherical filler was about 2.23 m²/g or so.

The viscosity of the main agent part thus prepared was about 324,100 cP or so.

Furthermore, the main agent part was mixed with the curing agent part of Example 1 in a volume ratio of 1:1 to prepare a curable composition, and the viscosity (mixed viscosity) measured immediately after preparation (immediately after mixing) of the curable composition was about 147,600 cP.

### Example 8.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H1, H2, and A2 of Example 1. The mixing ratio was 35:20:10:35 (A1: H1: A2: H2) as a weight ratio.

The weighted average particle diameter of the entire filler component was about 37.20 µm or so, the weighted average particle diameter of the spherical filler was about 58.89 µm or so, and the weighted average particle diameter of the non-spherical filler was about 19.45 µm or so. Furthermore, the weighted BET specific surface area of the entire filler component was about 1.34 m²/g or so, the weighted average BET specific surface area of the spherical filler was about 0.11 m²/g or so, and the weighted average BET specific surface area of the non-spherical filler was about 2.35 m²/g or so.

The viscosity of the main agent part thus prepared was about 314,200 cP or so.

Furthermore, the main agent part was mixed with the curing agent part of Example 1 in a volume ratio of 1:1 to prepare a curable composition, and the viscosity (mixed viscosity) measured immediately after preparation (immediately after mixing) of the curable composition was about 128,600 cP.

### Example 9.

A main agent part was prepared by mixing a polyol (P), a filler component (F), and a urethane reaction catalyst (C) in the same weight ratio as in Example 1. Here, as the polyol and urethane reaction catalyst, the same ones as those used in Example 1 were used.

The filler component was prepared by mixing the fillers A1, H1, H2, and A2 of Example 1. The mixing ratio was 30:20:15:35 (A1: H1: A2: H2) as a weight ratio.

The weighted average particle diameter of the entire filler component was about 34.70 µm or so, the weighted average particle diameter of the spherical filler was about 53.33 µm or so, and the weighted average particle diameter of the non-spherical filler was about 19.45 µm or so. Furthermore, the weighted BET specific surface area of the entire filler component was about 1.34 m²/g, the weighted average BET specific surface area of the spherical filler was about 0.11 m²/g, and the weighted average BET specific surface area of the non-spherical filler was about 2.35 m²/g or so.

The viscosity of the main agent part thus prepared was about 317,500 cP or so.

Furthermore, the main agent part was mixed with the curing agent part of Example 1 in a volume ratio of 1:1 to prepare a curable composition, and the viscosity (mixed viscosity) measured immediately after preparation (immediately after mixing) of the curable composition was about 125,400 cP.

The viscosity of the main agent and curing agent parts of each example, and the mixed viscosity, thermal conductivity, and volume resistance were summarized and described in Table 1 below. In Table 1, the unit of viscosity is cP, the unit of volume resistance is ×10¹² Ω·cm, and the unit of thermal conductivity is W/mK.

**[Table 1]**

| | Viscosity (main agent) | Viscosity (curing agent) | Mixed viscosity | Thermal conductivity | Volume resistance |
|---|---|---|---|---|---|
| Example 1 | 333,400 | 195,100 | 104,800 | 3.2 | 2.99 |
| Example 2 | 321,600 | 195,100 | 860,70 | 3.1 | 5.55 |
| Example 3 | 343,300 | 195,100 | 192,100 | 3.5 | 3.94 |
| Example 4 | 375,700 | 195,100 | 177,800 | 3.3 | 3.19 |
| Example 5 | 374,400 | 195,100 | 239,700 | 3.0 | 3.46 |
| Example 6 | 375,700 | 195,100 | 111,100 | 3.3 | 3.94 |
| Example 7 | 324,100 | 195,100 | 147,600 | 3.2 | 3.40 |
| Example 8 | 314,200 | 195,100 | 128,600 | 3.1 | 4.27 |
| Example 9 | 317,500 | 195,100 | 125,400 | 3.2 | 4.92 |

## Claims

1. A curable composition comprising: a main agent part including a main resin and a filler component; and
a curing agent part including a curing agent and a filler component, and
satisfying Equation 1 below, and
having a viscosity V_{M} of 70,000 cP or more in Equation 1 below: $0.5 \times \left({V}_{R}+{V}_{C}\right) > {V}_{M}$
wherein, V_{R} is the viscosity of the main agent part, V_{C} is the viscosity of the curing agent part, and V_{M} is the mixed viscosity of the main agent part and the curing agent part in a volume ratio of 1:1.

2. The curable composition according to claim 1, wherein the difference between 0.5 × (V_{R}+V_{C}) and V_{M} in Equation 1 is in a range of 20,000 to 300,000 cP.

3. The curable composition according to claim 1, wherein the difference (V_{R}-V_{C}) between V_{R} and V_{C} in Equation 1 is 50,000 cP or more.

4. A curable composition comprising a main agent part including a main resin and a filler component; and
a curing agent part including a curing agent and a filler component, wherein
ΔD in Equation 2 below is in a range of 30 to 500: $ΔD = 100 \times {D}_{C} {/ D}_{R}$
wherein, D_{R} is a weighted average particle diameter of the filler component in the main agent part, and D_{C} is a weighted average particle diameter of the filler component in the curing agent part.

5. The curable composition according to claim 1 or 4, forming a cured layer with a thermal conductivity of 2.9 W/mK or more.

6. The curable composition according to claim 1 or 4, forming a cured layer with a volume resistance of 1.0×10¹¹ Ω·cm or more.

7. The curable composition according to claim 1, wherein ΔD in Equation 2 below is in a range of 30 to 500: $ΔD = 100 \times {D}_{C} {/ D}_{R}$ wherein, D_{R} is a weighted average particle diameter of the filler component of the main agent part, and D_{C} is a weighted average particle diameter of the filler component of the curing agent part.

8. The curable composition according to claim 1 or 7, wherein ΔB in Equation 3 below is in a range of 10 to 500: $ΔB = 100 \times {B}_{R} {/ B}_{C}$ wherein, B_{R} is a weighted BET specific surface area of the filler component of the main agent part, and B_{C} is a weighted average BET specific surface area of the filler component of the curing agent part.

9. The curable composition according to claim 4 or 7, wherein the weighted average particle diameter D_{R} of the filler component of the main agent part is in a range of 15µm to 100µm.

10. The curable composition according to claim 8, wherein the weighted BET specific surface area B_{R} of the filler component of the main agent part is in a range of 0.2 m²/g to 3 m²/g.

11. The curable composition according to claim 4 or 7, wherein the filler components of the main agent and curing agent parts are composed of a spherical filler and a non-spherical filler, respectively.

12. The curable composition according to claim 11, wherein ΔD_{S} in Equation 4 below is in a range of 30 to 500: ${ΔD}_{S} = 100 \times {D}_{CS} {/ D}_{RS}$ wherein, D_{RS} is a weighted average particle diameter of the spherical filler in the filler component of the main agent part, and D_{CS} is a weighted average particle diameter of the spherical filler in the filler component of the curing agent part.

13. The curable composition according to claim 12, wherein ΔD_{A} in Equation 4 below is in a range of 0.5 to 300: ${ΔD}_{A} = 100 \times {D}_{CA} {/ D}_{RA}$ wherein, D_{RA} is a weighted average particle diameter of the non-spherical filler in the filler component of the main agent part, and D_{CA} is a weighted average particle diameter of the non-spherical filler in the filler component of the curing agent part.

14. The curable composition according to claim 11, wherein ΔB_{S} in Equation 3 below is in a range of 50 to 500: ${ΔB}_{S} = 100 \times {B}_{RS} {/ B}_{CS}$ wherein, B_{RS} is a weighted BET specific surface area of the spherical filler in the filler component of the main agent part, and B_{C} is a weighted average BET specific surface area of the spherical filler in the filler component of the curing agent part.

15. The curable composition according to claim 14, wherein ΔB_{A} in Equation 3 below is in a range of 20 to 400: ${ΔB}_{A} = 100 \times {B}_{RA} {/ B}_{CA}$ wherein, B_{RA} is a weighted BET specific surface area of the non-spherical filler in the filler component of the main agent part, and B_{CA} is a weighted average BET specific surface area of the non-spherical filler in the filler component of the curing agent part.

16. A product comprising a heat-generating component; and a material in contact with the heat-generating component, wherein
the material comprises the curable composition of claim 1 or 4, or a cured product thereof.

17. The product according to claim 16, wherein the heat-generating component is a battery cell, a battery module, or a battery pack.
